# EUROPEAN PATENT APPLICATION

(11) **EP 1 286 288 A1**
(43) Date of publication of application: **26.02.2003**
(21) Application number: 01934412.6
(22) Date of filing: 30.05.2001
(51) Int. Cl.: G06F 17/60, G06F 17/30

(54) **METHOD AND SYSTEM FOR DISTRIBUTING ADVERTISEMENTS OVER NETWORK**

(30) Priority: 31.05.2000 JP 2000163838
(71) Applicant: NTT DoCoMo, Inc., Tokyo 100-6150 (JP)
(72) Inventor: NATSUNO, Takeshi, Meguro-ku, Tokyo 153-0062 (JP); SATO, Takayuki 202, Gureisugaden-zemusuzaka, Shinagawa-ku, Tokyo 140-0004 (JP); NAGATSUMA, Daisuke, Hachioji-shi, Tokyo 193-0801 (JP)
(74) Representative: HOFFMANN - EITLE
(86) International application number: JP0104537
(87) International publication number: WO01093138

(57) **Abstract**

A communication terminal sends an access request to a WWW server connected to a network to a relay server in the network. The relay server sends this access request to the WWW server and receives display data from the WWW server and sends an advertisement ID specifying an advertisement satisfying a predefined condition to the communication terminal together with the display data. The communication terminal displays a screen by this display data and sends an advertisement data request including an advertisement ID received from the relay server through the relay server to an advertisement distribution server. When receiving an advertisement data request, the advertisement distribution server sends the advertisement ID contained in the advertisement data request to the communication terminal through the relay server. When receiving the advertisement data, the communication terminal displays an advertisement corresponding to the advertisement data along with the screen corresponding to the display data.

## Description

### BACKGROUND ART

### TECHNICAL FIELD

The present invention relates to a system and server for distributing advertisements of a high advertising effect for advertisers to a plurality of user terminals through a network.

### PRIOR ART

Known in the art is an advertisement distribution system which provides so-called banner advertisements to users accessing homepages on the WWW (World Wide Web). The banner advertisements provided by this type of advertisement distribution system are displayed as parts of the display screen of the homepages. The user can click on or otherwise operate the display of a banner advertisement to jump to another homepage using a URL (universal resource locator) buried in the banner advertisement so as to obtain more detailed advertisement information.

In general, however, an advertisement should be provided in a timely manner along with the presentation of a new product or service. Further, when the ability of a product or service to win over new customers has been exhausted, it is necessary to market another product or service. Therefore, the advertisements inserted into homepages have to be changed frequently. If it is necessary to frequently change the advertisements inserted in homepages in this way, however, an extremely heavy burden is placed on the providers of the homepages.

Further, the users viewing homepages have diverse preferences. Even if a homepage provider sacrifices precious area on the homepage to insert a banner advertisement, it will often not be welcomed by some users. For such users, the rise in the cost of data communications due to the unwanted advertisement and the slower response in the display on the communication terminal due to the display of the unwanted advertisement are big inconveniences. Further, since distribution of advertisements of products or services costs money, the advertisers want to distribute their advertisements to users of groups (age groups, gender, etc.) which could use those products or services. This is because even if advertisements are distributed to users other than those groups, there would be no response to the advertisements and the costs of distribution could not be recovered.

Therefore, providers of homepages are asked to distribute advertisements tailored to the preferences of the users and the desires of the advertisers.

From the user's perspective, however, the user has to notify the provider of the homepage of his preferences in order to get advertisements meeting the preferences distributed to him and therefore his privacy is invaded. Therefore, users not desiring an invasion of their privacy can no longer get the desired advertisements distributed to them.

Further, to distribute advertisements meeting the preferences of users and desires of advertisers, the providers of homepages are required to select the advertisements of the advertisers believing the accessing users to be sources of demand, select ones meeting the preferences of users from among them, and insert those advertisements in the homepages. This work is tremendously troublesome and places an excessive burden on the providers of homepages.

Further, other problems arise when distributing advertisements covering also mobile phones and other communication terminals. That is, mobile phones differ in display capabilities depending on their model, so even if distributing advertisements meeting the preferences of the users, the inconvenience may arise that the advertisements cannot be suitably displayed on the display units of the mobile phones of those users. Further, sometimes the data of an advertisement is of an excessive quality for the mobile phone receiving it. For example, when distributing color image data as the data of an advertisement, some mobile phones receiving it will have a color display capability while others will have only a black and white display capability. Even if mobile phones having only a black and white display capability receive image data for a color display, they can only display the advertisements in black and white. With this, there is no meaning in incurring expensive communications costs in order to distribute color image data. In the final analysis, distributing image data for black and white displays, which is smaller in the amount of data, to mobile phones only having a black and white display capability conversely can save on communication costs and reduce the burden on advertisers. Here, when the communication terminal receiving the advertisement is a personal computer etc., it is possible to upgrade by changing the advertisement display software or hardware and improve the display capability. Mobile phones, however, differ from personal computers in that they are comprised almost entirely of built-in systems. Therefore, after mobile phones have appeared on the market, it is generally difficult to get users to change the software or hardware to improve the advertisement display capability.

### DISCLOSURE OF THE INVENTION

A first object of the present invention is to provide a homepage including an advertisement to a user which accesses the homepage without placing an excessive burden on the provider of the homepage. A second object of the present invention is to distribute advertisements tailored to the tastes of the users and desires of the advertisers. A third object of the present invention is to prevent an invasion of privacy of the user when distributing advertisements tailored to the tastes of the users and desires of the advertisers. A fourth object of the present invention is to distribute suitable data commensurate with the display capability of the communication terminal of a user as data for display of an advertisement.

To achieve the above objects, the present invention provides a method of distribution of an advertisement comprising having a communication terminal send an access request to a WWW server connected to a network to a relay server in the network, having the relay server send the access request to the WWW server, receive display data of a homepage from the WWW server, and send the display data to the communication terminal and receive advertisement data from an advertisement distribution server connected to the network and send it to the communication terminal, and having the communication terminal display a screen corresponding to the display data and advertisement corresponding to the advertisement data.

According to this method of distribution of an advertisement, if an advertiser stores advertisement data in an advertisement distribution server, when a user of a communication terminal sends an access request to a WWW server, a relay server acquires the display data of the homepage from the WWW server, acquires the advertisement data from an advertisement distribution server, sends the display data and the advertisement data to the communication terminal, and displays the same on the communication terminal. Therefore, it is possible to display a homepage and advertisement on the communication terminal of the user without placing a burden on the advertiser or the provider of the homepage.

In a preferred embodiment, in the method of distribution of an advertisement provided according to the present invention, a communication terminal sends an access request to a WWW server connected to a network to a relay server in the network, the relay server sends the access request to the WWW server, receives display data of a homepage from the WWW server, receives from an advertisement distribution server connected to said network an advertisement ID of an advertisement, a desired sent user condition defined in advance for an advertiser of said advertisement being satisfied by a user of said communication terminal and a desired received advertisement condition defined in advance for said user of the communication terminal being satisfied by said advertisement, and sends it along with the display data to the communication terminal, the communication terminal displays a screen corresponding to the display data and sends an advertisement data request including the advertisement ID to the advertisement distribution server through the relay server, the advertisement distribution server sends advertisement data corresponding to an advertisement ID included in an advertisement request which is received to the communication terminal through the relay server, and the communication terminal receives the advertisement data and displays both a screen corresponding to the display data and an advertisement corresponding to the advertisement data.

According to this method of distribution of an advertisement, it is possible to distribute an advertisement satisfying both the desires of a user of a communication terminal and the desires of an advertiser. Further, according to this method of distribution of an advertisement, since the display data of the homepage and the advertisement ID are sent to the communication terminal, then the advertisement data corresponding to the advertisement ID is sent to the communication terminal, even if the communication bandwidth between the relay server and the communication terminal is limited, it is possible to sent display data of the homepage and the advertisement data to the communication terminal without problem. Further, according to the method of distribution of an advertisement, it is possible to produce still another advantage by making various types of improvements to the communication terminal. That is, an improvement is made to the communication terminal so as to return the advertisement ID to the relay server through the advertisement server even if received from the relay server when a predetermined operation is performed to set the terminal to refuse to receive advertisements. The user of such an improved communication terminal sets the communication terminal in advance as to whether to send back to the relay server an advertisement ID sent together with the display data of a homepage so as to receive just a homepage or receive both a homepage and an advertisement as the user himself desires.

The relay server may also receive the advertisement ID from the advertisement distribution server and send the display data to the communication terminal only when display data received from the WWW server includes advertisement display area designation data, and the communication terminal may also display an advertisement corresponding to the advertisement data on a display area designated by the advertisement display area designation data in the display data.

According to this method of distribution of an advertisement, the user of the communication terminal receives the advertisement only when accessing a homepage where carrying an advertisement is desirable. Homepages include ones where advertisements are desirable and ones where advertisements are not desirable. According to this method of distribution of an advertisement, only display data of homepages where advertisements are desirable include advertisement display area designation data. The advertisement ID is sent to the communication terminal along with the display data only when the display data of such a homepage is sent to the communication terminal.

In a preferred embodiment, the communication terminal communicates data with the relay server using a user ID specifying the user of the communication terminal and the relay server converts the user ID of the communication terminal to a data communication address by a predefined correspondence table or conversion method and uses the data communication address to communicate data with the advertisement distribution server.

According to this method of distribution of an advertisement, the user ID of the communication terminal is not transmitted to the advertisement distribution server. Therefore, it is possible to distribute advertisements satisfying the desires of a user and the desires of an advertiser without invading the privacy of the user.

In a preferred embodiment, the advertisement distribution server has a plurality of counters corresponding to various combinations of a plurality of data communication addresses and a plurality of advertisement IDs and increments the count of a counter corresponding to a combination of the data communication address and advertisement ID when receiving an advertisement data request including a certain advertisement ID from data communications using a certain data communication address.

According to this method of distribution of an advertisement, the advertisement distribution server counts the number of times of reception of advertisement data requests for each combination of a data communication address and advertisement ID, so it is possible to analyze the state of reception of advertisement data requests for each advertisement and what kind of advertisements each user is interested in. Further, while the advertisement distribution server can obtain a grasp of what kind of advertisement a certain user is interested in, it only knows the data communication address of the user and does not know the user ID, so cannot identify who exactly the user interested in such advertisements is. Accordingly, the privacy of the user is not invaded. Further, when the communication terminal is a mobile phone, there is the effect that the relay server or the advertisement distribution server can permanently identify the users having specific preferences without invading their privacy. The reason is that a mobile phone is in principal individually owned. Further, it is possible to identify the mobile phone network to which each belongs for each mobile phone. Therefore, by the relay server obtaining a grasp of the relationship between the user ID of each mobile phone and data communication address and the advertisement distribution server storing information relating to the preferences of the users of the mobile phones (about count) and data communication addresses corresponding to the mobile phones linked with each other, it is possible to obtain a permanent grasp of the relationship with the preferences of the users of the mobile phones. Accordingly, targeted advertising and the collection of market data, which used to be impossible, now become possible.

Various methods may be considered for distributing advertisements satisfying the desires of a user and the desires of an advertiser. The following for example may also be used. That is, the relay server may send a desired received advertisement condition predefined for the user of the communication terminal and information relating to the user when receiving an access request to the WWW server from the communication terminal, and the advertisement distribution server may store the desired sent user condition for distributable advertisement data and send to the relay server an advertisement ID satisfying the desired received advertisement condition in the advertisements provided with the desired sent user conditions satisfied by the information relating to the user when receiving the desired received advertisement condition and the information relating to the user from the relay server.

The advertisement distribution server may send an advertisement ID of other advertisement data included in the advertisement data, and the communication terminal may send an advertisement data request including the advertisement ID included in the advertisement data in accordance with an instruction from the user when receiving the advertisement data through the relay server.

Sometimes a user receiving a homepage carrying an advertisement wants to obtain more detailed information on the advertisement. According to this method, the user can perform a suitable operation to send an advertisement data request including an advertisement ID contained in the advertisement data to the relay server and obtain the advertisement data of the more detailed advertisement.

In a preferred embodiment, in the method of distribution of an advertisement provided according to the present invention, a plurality of advertisement data corresponding to the advertisement IDs and for distribution to a plurality of different models of communication terminals are stored in a database for the advertisement distribution server, the relay server sends model data specifying the model of the communication terminal to the advertisement distribution server included in the advertisement data request when receiving an advertisement data request from the communication terminal, and the advertisement distribution server reads advertisement data corresponding to the advertisement ID and model data included in the advertisement data request from the database and sends it to the relay server.

According to this method of distribution of an advertisement, advertisement data suitable for the communication terminal of a user receiving it is distributed.

The communication terminal may be a mobile communication terminal served by a mobile communication network, and the relay server may obtain a grasp of a current location of the communication terminal by a report from the mobile communication network and receive from the advertisement distribution server and send to the communication terminal an advertisement related to the current location of the communication terminal when receiving an access request to the WWW server from the communication terminal.

Further, the relay server may receive from the advertisement distribution server and send to the communication terminal an advertisement related to a time band when receiving an access request to the WWW server from the communication terminal.

Further, another preferred embodiment of the method of distribution of an advertisement according to the present invention comprises having a communication terminal send an access request to a WWW server connected to a network to a relay server in the network, having the relay server send the access request to the WWW server, receive display data of a homepage from the WWW server, add information for accessing the advertisement distribution server connected to the network, and send the same to the communication terminal, and having the communication terminal receive the display data and display the homepage, use information for accessing the advertisement distribution data to acquire advertisement data from the advertisement distribution data through the relay server, acquire the advertisement data from the advertisement distribution server, and display an advertisement together with the homepage in accordance with the advertisement data.

The present invention can not only be worked in the form of use of the method of distribution of an advertisement explained above, but can also be worked in the form of the manufacture and sale of a relay server required for using the method of distribution of an advertisement or in the form of the manufacture and sale of a communication terminal able to receive a service by this method of distribution of an advertisement. Further, the present invention can be worked in the form of the recordal of a program run for a commercial terminal to receive a service by this method of distribution of an advertisement in a computer readable storage medium and distribution of the same to the users or distribution of such a program through a telecommunications line.

### BRIEF DESCRIPTION OF THE DRAWINGS

FIG. 1 is a view of the configuration of a network system in which the method of distribution of an advertisement according to an embodiment of the present invention is worked.
FIG. 2 is a block diagram of an example of the configuration of a mobile communication terminal in the above system.
FIG. 3 is a block diagram of an example of the configuration of a relay server in the above system.
FIG. 4 is a view illustrating the content of a database for a relay server in the above system.
FIG. 5 is a view illustrating the content of a database for an advertisement distribution server in the above system.
FIG. 6 is a view of a group of advertisement data in the database.
FIG. 7 is a sequence diagram of the operation of the above embodiment.
FIG. 8 and FIG. 9 are views of examples of the display of a mobile communication terminal in the above embodiment.

### BEST MODE FOR WORKING THE INVENTION

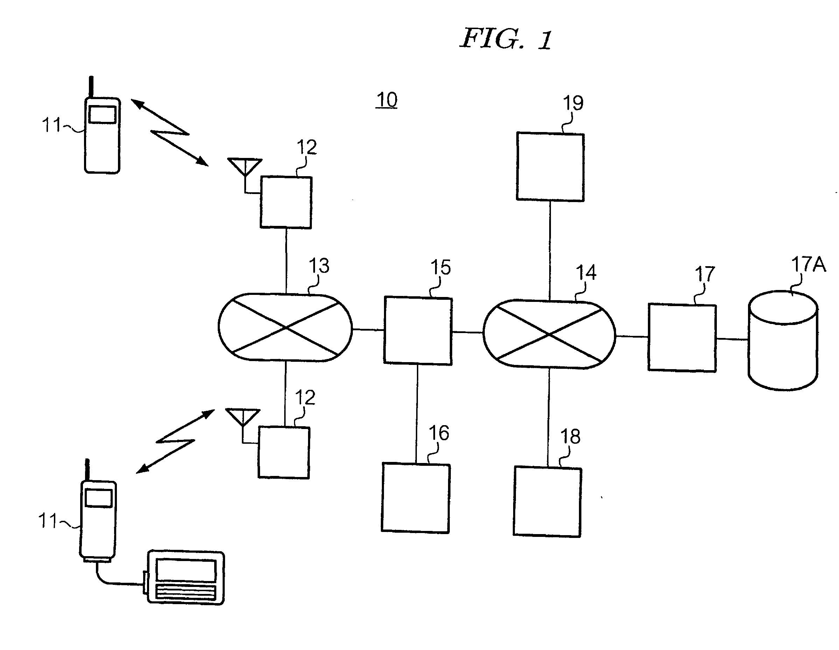

FIG. 1 is a view of the configuration of a network system in which the method of distribution of an advertisement according to a first embodiment of the present invention is worked.

In FIG. 1, a mobile communication network 13 includes a not shown base station controller and packet subscriber processor and other various apparatuses for providing packet communication services. The mobile communication network 13 also has a large number of wireless base stations 12 connected to it.

The mobile communication terminals 11 are for example portable phones, PHSs (Personal Handy-phone system phones), and other telephones by themselves or combinations of these with PDAs (Personal Digital Assistants) and other portable data processing devices. The mobile communication terminals 11 can engage in voice communications and packet communications with other parties through the wireless base stations 12 and the mobile communications network 13.

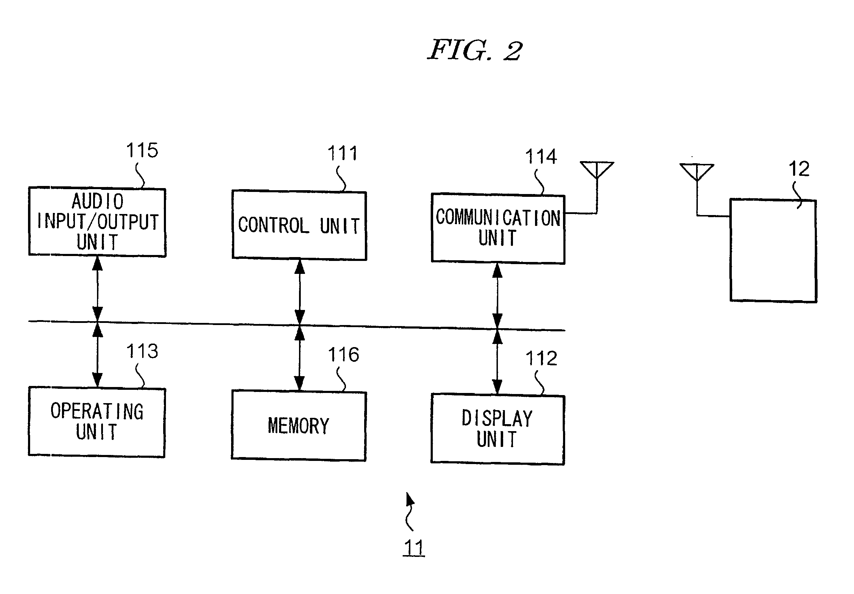

FIG. 2 is a block diagram of an example of the configuration of the mobile communication terminal 11. In FIG. 2, a control unit 111 is the center of control of the parts of the mobile communication terminal 11. A display unit 112 is a device for display of various information under the control of the control unit 111 and for example is a liquid crystal display panel. An operating unit 113 is comprised of pushbuttons or other operating parts arranged on the mobile communication terminal 11. The control unit 111 detects an operation performed on the operating unit 113 to interpret instructions given from the user. The communication unit 114 establishes a wireless link with the wireless base station 12 of the area in which the mobile communication terminal 111 is located under the control of the control unit 111 and communicates with other parties through this. A voice input/output unit 115 is a device consisting of mainly a speaker, microphone, and CODEC and is used for inputting the voice of the user and outputting the voice of the other party in the conversation when conversing by voice by the mobile communication terminal 11. A memory 116 stores various types of control programs or application programs executed by the control unit 111. An application program stored here includes a browser. The control unit 111 receives instructions from the user in accordance with the browser, accesses and obtains data from the site instructed from the user by the communication unit 114, and displays it on the display unit 112. A predetermined memory area of the memory 111 is used as the work area by the control unit 111. The above forms the mobile communication terminal 111.

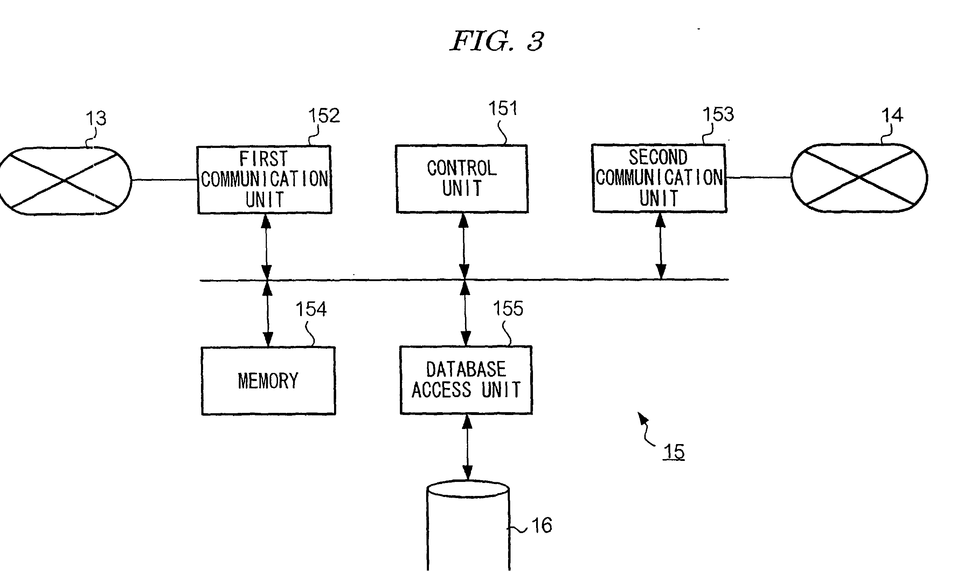

In FIG. 1, a relay server 15 functioning as a gateway is interposed between the mobile communication network 13 and the Internet 14. FIG. 3 is a block diagram of an example of the configuration of the relay server 15.

In FIG. 3, a control unit 151 is the center of control of the parts of the relay server 15.

A first communication unit 152 establishes a communication link with any mobile communication terminal 11 through the mobile communication network 13 under the control of the control unit 151 and communicates with this mobile communication terminal 11.

Further, a second communication unit 153 engages in packet communications with another party through the Internet 14 under the control of the control unit 151.

A memory 154 stores a group of programs executed by the control unit 151. The group of programs includes a program for conversion of communication protocol between the mobile communication network 13 and the Internet in FIG. 1 or a program for relaying data communications between the mobile communication terminals 11, between a mobile communication terminal 11 and a content server 18, or between a mobile communication terminal 11 and the advertisement distribution server 17. Further, the group of programs includes control programs for the management of user information, IP information, charging information, etc., the collection of an operation log, the provision of mail functions, and the control of the distribution of advertisements.

A database access unit 155 has a database server 16 shown in FIG. 1 connected to it. The database access unit 155 acquires various types of data from the database server 16 in accordance with an instruction from the control unit 151.

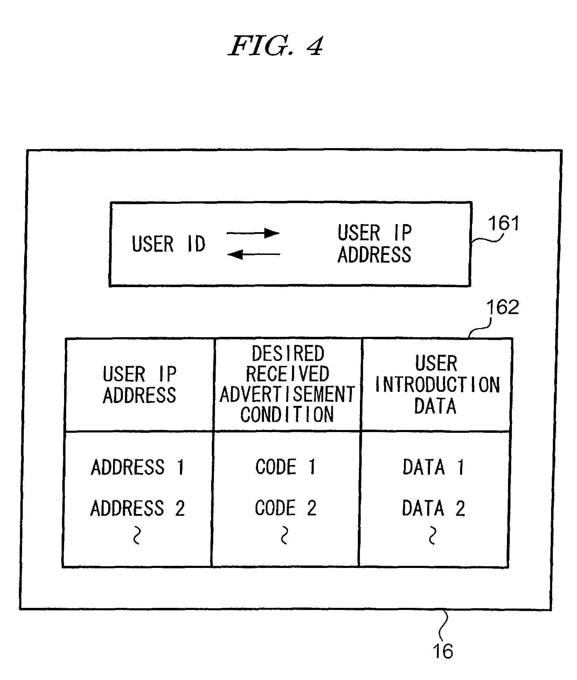

FIG. 4 shows the main data in the data stored in the database 16.

A conversion table 161 establishes correspondence between user IDs and user IP addresses. Here, a user ID is an ID for identifying a user receiving an advertisement distribution service in the present embodiment and specifically is a telephone number of the mobile communication terminal 11 owned by the user. A user IP address is a data communication address used instead of the user ID of the mobile communication terminal 11 in the Internet 14 in the case of data communications between a mobile communication terminal 11 having a certain user ID and the advertisement distribution server 17. When the relay server 15 relays packet communication performed between a mobile communication terminal 11 and the advertisement distribution server 17, it uses the conversion table 161 to convert the user ID contained in the packet transmitted from the mobile communication network 13 to the Internet 14 into a user IP address or convert a user IP address contained in a packet transmitted from the Internet 14 to the mobile communication network 13 to a user ID.

The conversion table 162 is a table establishing correspondence among the user IP addresses, codes of desired received advertisement conditions, and user introduction data.

Here, a "code of a desired received advertisement condition" is a code indicating the conditions of advertisements which a user identified by a user IP address desires distribution of and indicates for example the industry of the companies covered by the advertisements, the companies distributing advertisements, the content of the distribution of advertisements (advertisements for land or condominiums, advertisements for financial products, advertisements for electrical products, etc.), interests (cars, movies, music, education, etc.), hobbies, etc. Note that the information indicated by the code may also include whether or not to distribute advertisements. The "user introduction data" is the gender, age group (age), etc. of a user identified by the user IP address converted into a code. Further, the user introduction data includes model data indicating the models of the mobile communication terminals 11 of the users identified by the user IP addresses. The codes of the desired received conditions and user introduction data are for example prepared when a user receives an advertisement distribution service in the present embodiment and are added to the conversion table 162 linked with the user IP addresses of the users.

In FIG. If the Internet 14 has the content server 18, advertisement distribution server 17, and advertiser server 19 connected to it.

The content server 18 is a WWW server providing various content to users through the Internet 14. FIG. 1 shows only one content server 18 for preventing complication of the illustration, but in actually a large number of content servers 18 are connected to the Internet 14. These content servers 18 provide HTML data of homepages to users accessing them in order to receive requests for content. Some of these homepages may carry advertisements. The HTML data of such homepages includes advertisement display area designation data for designating the advertisement display areas in the display screen of the communication terminal of a user.

The advertiser server 19 is the server used when an advertiser prepares advertisement data and sends it to the advertisement distribution server 17 or inquires about the state of distribution of the advertisement data to the advertisement distribution server 17. Here, the advertisement data is data for displaying words or images of an advertisement on a display unit 112 of a mobile communication terminal 11.

The advertisement distribution server 17 is a server distributing advertisements through the Internet 14 and has a database 17A storing advertisement data and various types of information used for control of the distribution of advertisements.

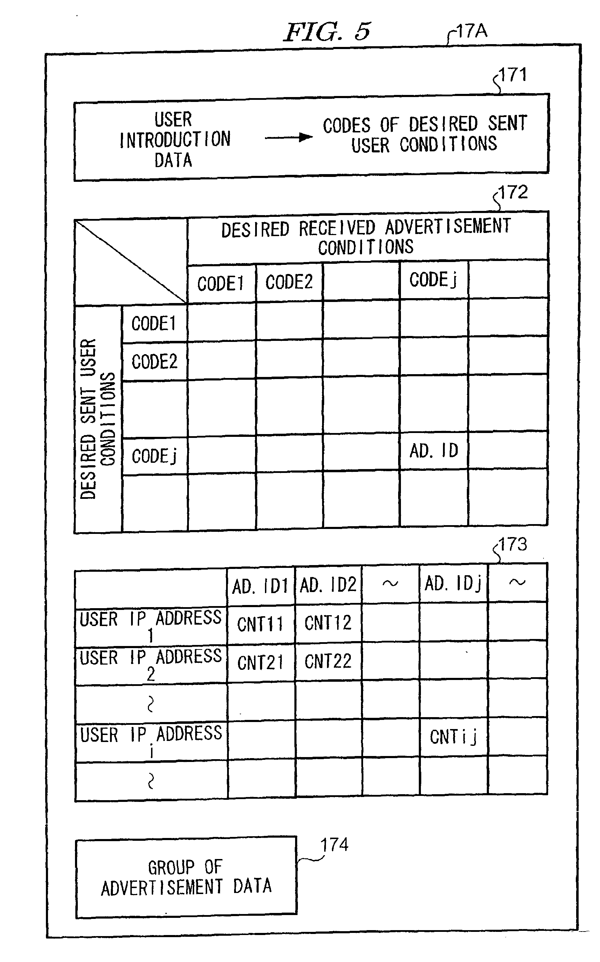

FIG. 5 is a view of the main information in the information stored in the database 17A.

The conversion module 171 is a module used for finding a code of a desired sent user condition when user introduction data satisfying one of the plurality of types of desired sent user conditions defined in advance is obtained through the Internet 14. When the user introduction data is data welcomed by most advertisers, sometimes two or more codes of the desired sent user conditions will be generated by this conversion module 171.

An advertisement retrieval table 172 is a table defining advertisement IDs specifying advertisements meeting the conditions for each combination of the predefined plurality of types of desired received advertisement conditions and plurality of types of desired sent user conditions. Each desired received advertisement condition is allocated a unique code. Further, the advertisement distribution server 17 can retrieve the advertisement IDs of the advertisements to be distributed to a user from the advertisement retrieval table 171 using as keys the code of the desired received advertisement conditions received through the Internet 14 and the desired sent user conditions obtained from the conversion module 171. There may be more than one advertisement ID , corresponding to a combination of one desired received advertisement condition code and one desired sent user condition code. There may be a plurality of such advertisement IDs. Alternatively, there may be no advertisement ID corresponding to such a combination of conditions. When there are a plurality of advertisement IDs corresponding to a combination of one desired received advertisement condition code and one desired sent user condition code, the area corresponding to the combination in the advertisement retrieval table 171 is filled with all of these advertisement IDs. Further, when there is no advertisement ID corresponding to a combination of one desired received advertisement condition code and one desired sent user condition code, the area corresponding to that combination in the advertisement retrieval table 171 becomes empty.

An access counter table 173 is a group of counters provided for each combination of a plurality of types of user IP addresses and a plurality of types of advertisement IDs and is used for counting the number of distribution requests of each advertisement of each user. The advertisement distribution server 17 increments by exactly "1" the count of a counter CNTij corresponding to a user IP address i and an advertisement IDj when a user corresponding to the user IP address i requests the distribution of the advertisement data corresponding to the advertisement IDj.

The group of advertisement data 174 is a group of advertisement data input through the advertiser server 19. Each set of advertisement data sometimes includes not only data relating to the advertisement, but also an advertisement ID for linkage with a detailed advertisement relating to that advertisement or a telephone number of the place for inquiry as to the advertisement. The advertisement distribution server 17 can read the advertisement data corresponding to any advertisement ID from the group of advertisement data.

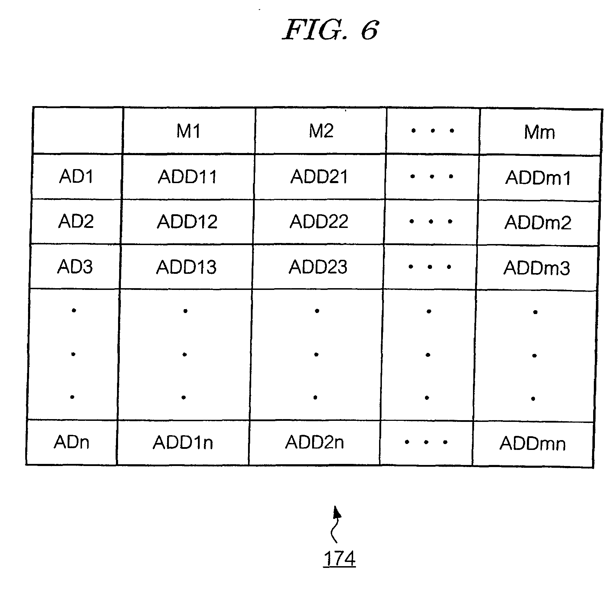

FIG. 6 shows the state of storage of the group of advertisement data 174 in the database 17A. As shown in FIG. 6, the database 17A stores the advertisement data ADD11, ADD21,... linked with the combinations of the advertisement IDs AD1, AD2, ... and model data M1 M2, ... A plurality of advertisement data ADDij (i = 1, 2,...) corresponding to the model data M1 M2,... are stored for the same advertisements (for example, the advertisement 1 of the advertisements (for example, the advertisement of the advertisement ID = ADj) because of the different display capabilities of different models of the mobile communication terminals 11. For example, when the mobile communication terminal 11 corresponding to the model data M1 can display an image in four black and white tones, while the mobile communication terminal 11 corresponding to the model data M2 can display an image in 256 colors, even if advertisement data ADD21 for the mobile communication terminal 11 corresponding to the model data M2 is distributed to the mobile communication terminal 11 corresponding to the model data M1 the mobile communication terminal 11 receiving this possibly may not be able to display the advertisement in a manner enabling the user to read it. Therefore, in the present embodiment, a plurality of advertisement data ADDij (i = 1, 2,...) corresponding to the model data M1 M2,... for the advertisements j (j = 1, 2,...) are prepared in the database 17A. The advertisement distribution server 17 selects the advertisement data corresponding to the model data of the destination mobile communication terminal 11 of the distribution from among these and distributes the same.

The above were details of the configuration of the system 10 according to the present embodiment.

Note that in the configuration shown in FIG. 1, the servers 17, 18, and 19 are connected to each other through the Internet 14. These servers may however also be connected through another network such as dedicated lines. Further, the relay server 15 or advertisement distribution server 17 does not have to be configured as a single server and may also be configured by a plurality of apparatuses.

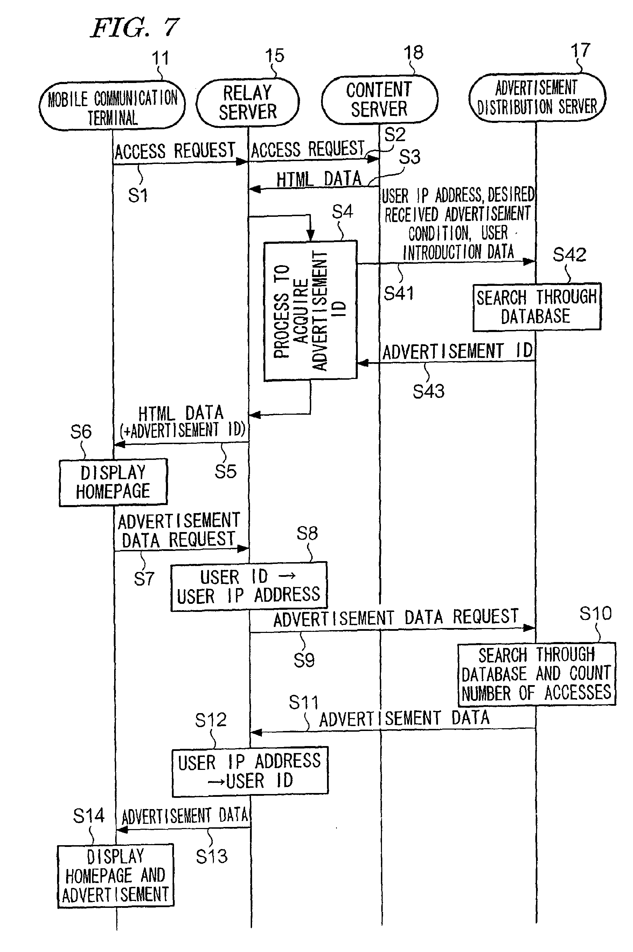

FIG. 7 is a sequence diagram of the operation of the above embodiment. The operation of the present embodiment will be explained with reference to the sequence diagram.

When a user performs an operation for accessing a certain homepage on the operating unit 113 of the mobile communication terminal 11, the control unit 111 sends the access request to the homepage from the communication unit 114 (step S1). This access request includes a user ID and a URL (uniform resource locator) corresponding to the destination homepage of the access. The access request is received by the wireless base station 12 of the area in which the mobile communication terminal 11 is located and is sent to the relay server 15 through the mobile communication network 13.

The relay server 15 acquires the HTML (hyper text markup language) data of the homepage corresponding to the URL included in a received access request. Here, when the URL indicates the location of a database of the relay server 15 as the location of the homepage, the relay server 15 acquires the HTML data from the database. Further, when the URL indicates the location of the content server 18 as the location of the homepage, the relay server 15 sends the access request to the content server 18 through the Internet 14 (step S2) and receives the HTML data of the homepage 14 (step S2) and receives the HTML data of the homepage corresponding to the URL in the access request from the content server 18 (step S3).

When the thus acquired HTML data is included in the advertisement display area designation data, the relay server 15 executes processing for acquiring the advertisement ID in the following way (step S4). First, the relay server 15 uses the conversion table 161 (FIG. 4) stored in the database 16 to find the user IP address corresponding to the user ID in the access request received from the mobile communication terminal 11 at step S1 Further, the relay server 15 uses the conversion table 162 (FIG. 4) stored in the database server 16 to find the code of the desired received advertisement conditions corresponding to the same user IP address and the user introduction data. The relay server 15 sends the user IP address, code of the desired received advertisement conditions, and user introduction data obtained in this way to the advertisement distribution server 17 through the Internet 14. The advertisement distribution server 17 searches through the database for finding the advertisement ID when receiving this information (step S42). Explaining this in more detail, the advertisement distribution server 17 generates the code of the desired sent user conditions from the user introduction data from the conversion module 171 (FIG. 5) stored in the database 17A. Next, the advertisement distribution server 17 finds the advertisement ID corresponding to the combination of a code of the desired sent user conditions and the code of the desired sent user conditions received from the relay server 15 found in this way from the retrieval table 172 stored in the database 17A. Further, the advertisement distribution server 17 sends the advertisement ID found in this way to the relay server 15 along with the user IP address (step S43).

The relay server 15 sends the HTML data acquired from the database or content server 18 to the mobile communication terminal 11. At that time, the relay server 15 sends the advertisement ID to the mobile communication terminal 11 together with the HTML data when there is an advertisement ID acquired from the advertisement distribution server 17 (above, step S5).

The mobile communication terminal 11 displays the initial image of the homepage on the display unit 112 in accordance with the HTML data when receiving the HTML data. Further, the mobile communication terminal 11 sends an advertisement data request including the advertisement ID and user ID when receiving an advertisement ID together with the HTML data (step S7).

The relay server 15 converts the user ID included in any received advertisement data request to a user IP address by the conversion table 161 (FIG. 4) (step S8) and finds the user introduction data corresponding to this user IP address by the conversion table 162. Further, it generates an advertisement data request including the advertisement ID, user IP address, and model data in the user introduction data and sends it through the Internet 14 to the advertisement distribution server 17 (step S9).

The advertisement distribution server 17 retrieves the advertisement data specified by the advertisement ID and model data contained in any advertisement data request received from the group of advertisement data 174 in the database 17A (FIG. 5 and FIG. 6). Further, the advertisement distribution server 17 increments by exactly "1" the count of the access counter table 173 (FIG. 5) corresponding to the combination of the user IP address and advertisement ID contained in the advertisement data request (above, step S10).

Further, the advertisement distribution server 17 sends the advertisement data obtained from the search to the relay server 15 along with the user IP address (step S11). The relay server 15 replaces the user IP address obtained from the advertisement distribution server 17 with the user ID (step S12), adds this to the advertisement data obtained from the advertisement distribution server 17, and sends the same to the mobile communication terminal 11 (step S13).

When receiving the advertisement data, the mobile communication terminal 11 displays an advertisement corresponding to the advertisement data in an area designated by the advertisement display area designation data in the HTML data in the initial screen of the homepage currently being displayed (step S14).

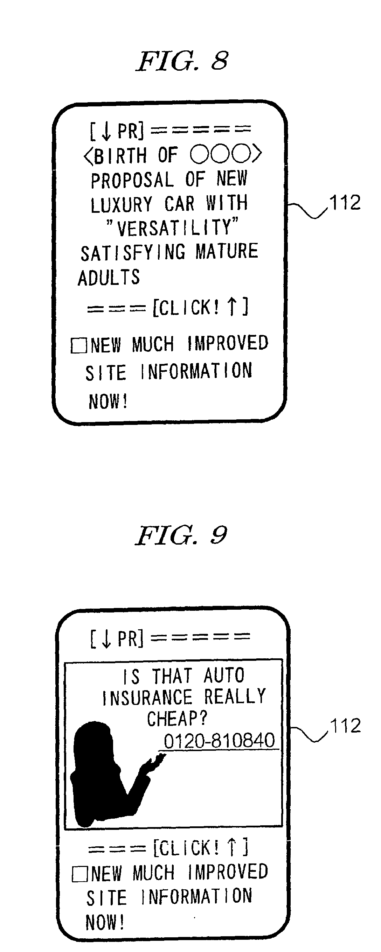

FIG. 8 shows an example of a screen displayed on the display unit 112 of the mobile communication terminal 11 in this way. In FIG. 8, the area enclosed by "[9PR]= = = = =" and "= = = = =[CLICK!8]" is the advertisement display area. As shown in the example, the display unit 112 of the mobile communication terminal 11 displays a homepage screen in which a text type advertisement is inserted in the advertisement display area.

Now, the advertisement data received by the mobile communication terminal 11 sometimes includes an advertisement ID for linking with a detailed advertisement related to the advertisement corresponding to this. In such a case, the user can operate the operating unit 113 of the mobile communication terminal 11 to, as explained below, send an advertisement data request from the communication unit 114 and acquire a detailed advertisement related to the text-type advertisement from the advertisement distribution server 17. Note that the operation of the system 10 corresponding to this is basically the same as steps S6 to S14 already explained, so illustration of the sequence will be omitted in FIG. 7.

First, if the user operates the operating unit 113 of the mobile communication terminal 11 selects and clicks on the "PROPOSAL OF NEW LUXURY CAR" portion of the display screen, the mobile communication terminal 11 sends a new advertisement data request. This advertisement data request includes an advertisement ID specifying the advertisement data corresponding to the "PROPOSAL OF NEW LUXURY CAR" selected by the user, the URL specifying the advertisement distribution server 17, and the user ID of the mobile communication terminal 11.

The relay server 15 replaces the user ID contained in any advertisement data request received with the user IP address, adds it to the model data of the mobile communication terminal 11, and sends it to the advertisement distribution server 17.

The advertisement distribution server 17 retrieves the advertisement data corresponding to the advertisement ID and model data contained in an advertisement data request which it receives. Further, the advertisement distribution server increments by exactly "1" the count of an access counter table 173 corresponding to the user IP address and advertisement ID contained in the advertisement data request. Further, the relay server 15 sends the advertisement data obtained by the search to the relay server 15.

When receiving the advertisement data and user IP address, the relay server 15 converts the user IP address to a user ID. Further, the relay server 15 sends advertisement data to the mobile communication terminal 11 corresponding to this user ID.

When receiving this advertisement data, the mobile communication terminal 11 displays a homepage screen with a banner type advertisement inserted in it accordingly on the display unit 112. Here, when the advertisement data includes a telephone number of the customer service section of the advertiser etc., as shown in FIG. 9, the telephone number is displayed on the display unit 112 by the control unit 111. In this state, if the user operates the operating unit 113 to select and confirm (click on) a display of the telephone number, the control unit 111 sends a call request using the telephone number to the communication unit 114.

Due to this, the customer service section of the advertiser is called up. Further, if a section staff answers the call, the mobile communication terminal 11 and the telephone of the section staff are connected. Due to this, the user can directly talk with the section staff about the advertisement and obtain more detailed information.

As explained above, according to the present invention, a user can collect useful advertisements without an unnecessary invasion of the user's privacy, while an advertiser can distribute effective advertisements with a high rate of return.

The present invention includes the modifications listed below.

### (1) First Modification

In this modification, the database 17A stores a telephone number table. This telephone number table is a table establishing correspondence between advertisement table establishing correspondence between advertisement IDs and telephone numbers of customer service sections of advertisers of advertisements corresponding to these advertisement IDs.

In this modification, when receiving advertisement data, the mobile communication terminal 11 displays a homepage screen with a banner type advertisement inserted in it on the display unit 112 in accordance with this.

In this state, if the user selects and confirms (clicks on) the banner type advertisement, the advertisement ID of the banner type advertisement and a telephone number request are sent from the mobile communication terminal 11. These are sent through the relay server 15 to the advertisement distribution server 17. As explained in the above embodiment, the information reaching the advertisement distribution server 17 also includes, in addition to the advertisement ID and the telephone number distribution request, the user IP address of the user of the mobile communication terminal 11. The advertisement distribution server 17 increments by exactly "1" the count of the access counter table corresponding to the user IP address and advertisement ID and reads the telephone number corresponding to the advertisement ID from the telephone number table in the database 17A. Further, the advertisement distribution server 17 sends the telephone number and call instruction information to the mobile communication terminal 11 through the relay server 15. The mobile communication terminal 11 automatically makes a call using the received telephone number when receiving the telephone number and call instruction information.

According to this modification, when telephone calls are made to customer service section of an advertiser, the number of the same is reflected in the count of the access counter table. Therefore, an advertiser can inquire about the count of the access counter table by the advertiser server to obtain a quantitative grasp of the degree of interest of users in an individual advertisement.

Note that it is also possible to provide an access counter table recording the number of telephone inquiries separate from an access counter table recording the number of requests for advertisement data and to separately record the number of requests for advertisement data and the number of telephone inquiries.

### (2) Second Modification

In the above first modification, if the user clicks on (selects and confirms) an advertisement, the telephone number of the customer service section of the advertiser of the advertisement is sent from the advertisement distribution server 17 to the mobile communication terminal 11. As opposed to this, in this modification, the database 17A stores data of music (so-called "incoming melody") to be played as an incoming signal at the time the mobile communication terminal receives a call linked with the advertisement ID. If a user clicks on an advertisement when the mobile communication terminal 11 displays an advertisement, an advertisement ID and an incoming melody distribution request are sent from the mobile communication terminal 11 through the relay server 15 to the advertisement distribution server 17. The advertisement distribution server 17 reads the data of the incoming melody corresponding to the advertisement ID from the database 17A and sends it through the relay server 15 to the mobile communication terminal 11. The mobile communication terminal 11 stores the data of the incoming melody in the memory 116. After this, the incoming melody is generated in accordance with this data at the time of receiving a call.

### (3) Third Modification

In the second embodiment, when a user clicked on (selected and confirmed) an advertisement, the data of an incoming melody was sent from the advertisement distribution server 17 to the mobile communication terminal 11. As opposed to this, in this modification, the database 17A stores display data of a standby screen displayed at the time the mobile communication terminal 11 is waiting for a call in correspondence with the advertisement IDs. Further, if the user performs an operation to click on the advertisement when an advertisement is displayed on the mobile communication terminal 11, display data of a standby screen corresponding to the advertisement ID of the advertisement is sent from the advertisement distribution server 17 to the mobile communication terminal 11. The specific operation is exactly the same as the second embodiment, so the explanation will be omitted.

### (4) Fourth Modification

In the present embodiment, there is a possibility that the number of users to which a certain advertisement is sent would end up exceeding a limit on advertisement distribution costs set by the advertiser. To prepare for such a situation, it is also possible to set a priority order in the desired sent user condition to keep the costs under the limit of the advertisement distribution costs.

### (5) Fifth Modification

It is also possible to detect the current location of the mobile communication terminal 11 based on a report from a mobile communication exchange office (not shown) servicing the mobile communication terminal 11 and distribute an advertisement corresponding to the detected location. More specifically, when the current location of the mobile communication terminal 11 is the Ginza shopping district at a certain point of time and there is an advertiser having a chain store in the Ginza, it is possible to distribute an advertisement relating to the chain store of the advertiser in the Ginza district (location, sale information, etc.)

### (6) Sixth Modification

The invention may also be configured so that when the relay server 15 receives an access request to the content server 18 from the mobile communication terminal 11 at a certain time band, an advertisement related to the time band is distributed. For example, it is also possible to distribute an advertisement of a restaurant etc. describing "ONE FREE DRINK" etc. in a time band after the end of working hours, i.e., after five, and distribute a notification of a lunch menu etc. as an advertisement in the lunch hour. Further, it is also possible to configure the invention to distribute an advertisement of a time service using the position information described in the fifth modification.

### (7) Seventh Modification

In the present embodiment, the relay server 15 sent the advertisement ID to the mobile communication terminal 11 and acquired the advertisement data corresponding to the advertisement ID from the advertisement distribution server 17 and sent it to the mobile communication terminal when an advertisement data request including this advertisement ID was sent from the mobile communication terminal 11. Instead of this, however, it is also possible for the relay server 15 to acquire the advertisement data corresponding to this advertisement ID from the advertisement distribution server at the point of time of acquiring the advertisement ID and send it together with the already received HTML data from the content server 18 to the mobile communication terminal 11.

### (8) Eighth Modification

In the present embodiment, HTML data including advertisement display area designation data was sent to the mobile communication terminal 11. It is also possible, however, not to do this, but to send HTML data not containing advertisement display area designation data to the mobile communication terminal 11, have the mobile communication terminal 11 divide the display screen into for example a top half and bottom half, display the advertisement on one, and display a screen corresponding to the HTML data on the other.

### (9) Ninth Modification

In the present embodiment, the user ID was converted to an IP address and used as a data communication address for data communication with the advertisement distribution server, but the invention is not limited to an IP address. It is also possible to allocate a unique identifier not overlapping between portable phones and not overlapping between users to each user as a data communication address.

### (10)10th Modification

In the present embodiment, the advertisement ID was an ID fixed for each advertisement, but this not necessarily be the case. In the present embodiment, the content server sends an identifier to the advertisement distribution server. This identifier may be generated at random or may be generated in accordance with the type of the content server or homepage. The advertisement distribution server allocates an advertisement ID in accordance with an identifier sent from the content server.

### (11) 11th Modification

In the present embodiment, the relay server judges the necessity of acquisition of the advertisement ID (specifically the preence of advertisement display area designation data), acquires the advertisement ID from the advertisement distribution server, and acquires the advertisement data from the advertisement distribution server in accordance with the return of the advertisement ID from the communication terminal. It is also possible to have this processing performed at the communication terminal. That is, in this modification, when the relay server receives the HTML data of the homepage from the content server, it adds the information for accessing the advertisement distribution server (for example, the URL of the advertisement distribution server) to the HTML data and transfers it to the communication terminal. The communication terminal judges if the HTML data includes advertisement display area designation data or data corresponding to the same and, when there is corresponding data, requests the advertisement data to the advertisement distribution server through the relay server. Here, the relay server uses the user ID of the communication terminal in the data communications with the communication terminal while uses the user IP address found from the user ID in data communications with the advertisement distribution server. This point is as already explained in the above embodiment. The advertisement distribution server finds information relating to the preferences of the user from the user IP address of the user requesting the advertisement data, selects advertisement data meeting the preferences of the user and satisfying the desires of the advertisers, and sends the data to the communication terminal through the relay server.

### (12)12th Modification

It is also possible to distribute not only the advertisement data of a text advertisement, but also distribute advertisement data of an image advertisement. (banner advertisement) to the communication terminal.

### (13) 13th Modification

In the present embodiment, when there is a detailed advertisement relating to a certain advertisement, the advertisement distribution server stores the ID of that certain advertisement and the URL of the page of the detailed advertisement linked with each other. The communication terminal of a user receiving the advertisement data from the advertisement distribution server displays the advertisement by that advertisement data, but if receiving an operation requesting the detailed advertisement (specifically, a click operation on the banner advertisement), sends the request for the detailed advertisement through the relay server to the advertisement distribution server. When receiving the request, the advertisement distribution server finds the advertisement ID distributed to the user sending the request and then searches for the URL of the page of the detailed advertisement linked with that advertisement ID. Further, it sends the URL showing the location of the detailed advertisement to the communication terminal. The communication terminal acquires a detailed advertisement using this URL and displays it on the display unit.

### (14) 14th Modification

It is possible to improve the communication terminal so as not to return the advertisement ID through the advertisement server to the relay server even if received from the relay server when a predetermined operation is performed to set the terminal to refuse the reception of advertisements in advance. A user of such an improved communication terminal can set the communication terminal in advance as to whether to return the advertisement ID sent together with the display data of the homepage to the relay server so as to receive only a homepage or both of a homepage and advertisement according to the user's own preference at that time.

## Claims

1. A method of distribution of an advertisement comprising:
having a communication terminal send an access request to a WWW server connected to a network to a relay server in the network,
having said relay server send said access request to said WWW server, receive display data of a homepage from said WWW server, send said display data to said communication terminal, and receive advertisement data from an advertisement distribution server connected to said network and send it to said communication terminal, and
having said communication terminal display a screen corresponding to said display data and advertisement corresponding to said advertisement data.

2. A method of distribution of an advertisement comprising
having a communication terminal send an access request to a WWW server connected to a network to a relay server in the network,
having said relay server send said access request to said WWW server, receive display data of a homepage from said WWW server, receive from an advertisement distribution server connected to said network an advertisement ID of an advertisement, a desired sent user condition defined in advance for an advertiser of said advertisement being satisfied by a user of said communication terminal and a desired received advertisement condition defined in advance for said user of the communication terminal being satisfied by said advertisement, and send it along with said display data to said communication terminal,
having said communication terminal display a screen corresponding to said display data and send an advertisement data request including said advertisement ID to said advertisement distribution server through said relay server,
having said advertisement distribution server send advertisement data corresponding to an advertisement ID included in an advertisement request which is received to said communication terminal through said relay server, and
having said communication terminal receive said advertisement data and display both a screen corresponding to said display data and an advertisement corresponding to said advertisement data.

3. A method of distribution of an advertisement as set forth in claim 2, further comprising:
having said relay server receive said advertisement ID from said advertisement distribution server and send said display data to said communication terminal only when display data received from said WWW server includes advertisement display area designation data, and
having said communication terminal display an advertisement corresponding to said advertisement data on a display area designated by said advertisement display area designation data in said display data.

4. A method of distribution of an advertisement as set forth in claim 2, further comprising having said communication terminal communicate data with said relay. server using a user ID specifying the user of said communication terminal and having said relay server convert the user ID of said communication terminal to a data communication address by a predefined correspondence table or conversion method and use the data communication address to communicate data with said advertisement distribution server.

5. A method of distribution of an advertisement as set forth in claim 4, further comprising having said advertisement distribution server have a plurality of counters corresponding to various combinations of a plurality of data communication addresses and a plurality of advertisement IDs and increment the count of a counter corresponding to a combination of the data communication address and advertisement ID when receiving an advertisement data request including a certain advertisement ID from data communications using a certain data communication address.

6. A method of distribution of an advertisement as set forth in claim 2, further comprising
having said relay server send a desired received advertisement condition predefined for the user of the communication terminal and information relating to the user when receiving an access request to said WWW server from said communication terminal and
having said advertisement distribution server store said desired sent user condition for distributable advertisement data and send to said relay server an advertisement ID satisfying said desired received advertisement condition in the advertisements provided with said desired sent user conditions satisfied by said information relating to said user when receiving said desired received advertisement condition and said information relating to the user from said relay server.

7. A method of distribution of an advertisement as set forth in claim 2, further comprising
having said advertisement distribution server send an advertisement ID of another advertisement data included in said advertisement data and
having said communication terminal send an advertisement data request including the advertisement ID included in said advertisement data in accordance with an instruction from the user when receiving said advertisement data through said relay server.

8. A method of distribution of an advertisement as set forth in claim 2, further comprising
having a plurality of advertisement data corresponding to the advertisement IDs and for distribution to a plurality of different models of communication terminals stored in a database for said advertisement distribution server,
having said relay server send model data specifying the model of said communication terminal to said advertisement distribution server included in said advertisement data request when receiving an advertisement data request from said communication terminal, and
having said advertisement distribution server read advertisement data corresponding to the advertisement ID and model data included in said advertisement data request from said database and send it to said relay server.

9. A method of distribution of an advertisement as set forth in claim 1, wherein
said communication terminal is a mobile communication terminal served by a mobile communication network,
further comprising having said relay server obtain a grasp of a current location of said communication terminal by a report from said mobile communication network and receive from said advertisement distribution server and send to said communication terminal an advertisement related to the current location of said communication terminal when receiving an access request to said WWW server from said communication terminal.

10. A method of distribution of an advertisement as set forth in claim 1, further comprising having said relay server receive from said advertisement distribution server and send to said communication terminal an advertisement related to a time band when receiving an access request to said WWW server from said communication terminal.

11. A method of distribution of an advertisement comprising
having a communication terminal send an access request to a WWW server connected to a network to a relay server in said network,
having said relay server send said access request to said WWW server, receive display data of a homepage from said WWW server, add information for accessing the advertisement distribution server connected to said network, and send the same to said communication terminal, and
having said communication terminal receive said display data and display said homepage, use information for accessing said advertisement distribution data to acquire advertisement data from said advertisement distribution data through said relay server, acquire the advertisement data from said advertisement distribution server, and display an advertisement together with said homepage in accordance with the advertisement data.

12. A relay server having a first communication unit for communicating with a communication terminal, a second communication unit for communicating with a WWW server and an advertisement distribution server, and a control unit, wherein
said control unit receives from said first communication unit an access request to the WWW server sent from said communication terminal, sends said access request from said second communication unit to said WWW server when receiving it, and receives display data from said WWW server and sends an advertisement ID of an advertisement by said first communication unit to said communication terminal along with said display data, a desired sent user condition predefined for an advertiser of said advertisement being satisfied by a user of said communication terminal and a desired received advertisement condition predefined for the user of said communication terminal being satisfied by the advertisement, receives an advertisement data request including said advertisement ID from said first communication unit, sends an advertisement data request from said second communication unit to said advertisement distribution server at that time, receives advertisement data corresponding to the advertisement ID included in said advertisement data request, and sends the same from said first communication unit to said communication terminal.

13. A communication terminal having a communication unit, display unit, and control unit, wherein said control unit receives display data including advertisement display unit receives display data including advertisement display area designation data and an advertisement ID specifying an advertisement from said communication unit, displays a screen corresponding to said display data on said display unit at that time, sends an advertisement data request including said advertisement ID from said communication unit to a relay server in a network, receives advertisement data corresponding to said advertisement ID from said relay server by said communication unit, and displays an advertisement corresponding to said advertisement data on an area of said display unit designated by said advertisement display area designation data at that time.

14. A method of control of a communication terminal having a communication unit, display unit, and control unit, said method of control of a communication terminal comprising having said control unit receive display data including advertisement display area designation data and an advertisement ID specifying an advertisement from said communication unit, display a screen corresponding to said display data on said display unit at that time, send an advertisement data request including said advertisement ID from said communication unit to a relay server in a network, receive advertisement data corresponding to said advertisement ID from said relay server by said communication unit, and display an advertisement corresponding to said advertisement data on an area of said display unit designated by said advertisement display area designation data at that time.

15. A control program of a communication terminal having a communication unit, display unit, and control unit, said control program causing said control unit to perform control for receiving display data including advertisement display area designation data and an advertisement ID specifying an advertisement from said communication unit, displaying a screen corresponding to said display data on said display unit at that time, sending an advertisement data request including said advertisement ID from said communication unit to a relay server in a network, receiving advertisement data corresponding to said advertisement ID from said relay server by said communication unit, and displaying an advertisement corresponding to said advertisement data on an area of said display unit designated by said advertisement display area designation data at that time.

16. A computer readable storage medium storing a control program of a communication terminal having a communication unit, a display unit, and a control unit, said storage medium recording a control program for causing said control unit to perform control for receiving display data including advertisement display area designation data and an advertisement ID specifying an advertisement from said communication unit, displaying a screen corresponding to said display data on said display unit at that time, sending an advertisement data request including said advertisement ID from said communication unit to a relay server in a network, receiving advertisement data corresponding to said advertisement ID from said relay server by said communication unit, and displaying an advertisement corresponding to said advertisement data on an area of said display unit designated by said advertisement display area designation data at that time.
